# EUROPEAN PATENT APPLICATION

(11) **EP 0 852 443 A2**
(43) Date of publication of application: **08.07.1998**
(21) Application number: 98300019.1
(22) Date of filing: 05.01.1998
(51) Int. Cl.: H04N 7/173, G06F 17/30

(54) **An apparatus for producing interactive television programs**

(30) Priority: 03.01.1997 US 34683 P
(71) Applicant: TEXAS INSTRUMENTS INC., Dallas, Texas 75243 (US)
(72) Inventor: Thrift, Phillip R., Dallas, Texas 75243 (US)
(74) Representative: Darby, David Thomas

(57) **Abstract**

A Java television receiver (10) includes a Java television platform (12) that has a bidirectional Internet connection (14) capable of sending Internet data to the Java television platform (12) and transmitting data from the Java television platform (12) to an Internet provider. Additionally, a memory (13) is included to store a deck of showlet cards (15a) downloaded from the Internet. A tuner/decoder (24) connected to the Java television platform (12) is provided which can receive, tune and decode television signals. An audio/video overlay (32) connected to the Java television platform is provided to combine a showlet card (15b) from the Java television platform (12) and television signals from the tuner/decoder (24). The display of showlet cards (15b) and television signals is coordinated by a synchronization unit (30). Finally, a video output (36) and an audio output (38) sends the combined Internet data and television signals to a television (40).

## Description

### TECHNICAL FIELD OF THE INVENTION

This invention relates to the field of television and more specifically to an apparatus for producing interactive television programs.

### BACKGROUND OF THE INVENTION

Television viewing is something of a national past time. The vast majority of people spend many hours in front of the television watching the latest offerings from the major networks as well as a plethora of cable channels. These programs can be a source of news, they can be educational, or they can be a source of escapist fun. Unfortunately, due to the passive nature of television, the viewer is left to sit and stare at the television without being able to interact with the program being viewed.

The Internet and especially the part of the Internet known as the world wide web has seen tremendous growth in recent years. An outgrowth of ARPANET, a network founded in 1971 to allow defense researchers to share information, several million computers now comprise what is known as the Internet. Surf the web has become a type of battle cry for the computer savvy generation of today. For many of these computerphiles, accessing the world wide web has replaced television as a favorite diversion. The Internet, and in particularly the world wide web, offers the advantage of being more interactive. Web pages offer a hypertext environment such that a user can jump from one subject to the next, exploring and learning information at his or her own pace. The major broadcast and cable networks are not unaware to this medium and have launched Internet sites to enhance their television coverage. For example, during the past US election the major networks not only had live broadcast coverage but also had additional information available on their web site. The draw back to this approach is that when a typical user is on the web, he or she is not watching television and therefore can not experience both mediums at the same time. Also, while the Internet provides a more interactive environment, it can't compete with the video capabilities of television.

Combining the two mediums and allowing simultaneous display of both television signals and Internet data allows both experiences to be enjoyed at once. While this addresses some of the short comings inherent in television viewing alone and Internet accessing alone, the result is still not truly interactive. In addition, while a specific Internet page can be displayed corresponding to a specific television channel, the Internet data is in no way synchronized to the television broadcast.

### SUMMARY OF THE INVENTION

From the foregoing, it may be appreciated that a need has arisen for an apparatus that produces interactive television programs. In accordance with the present invention, an apparatus for producing interactive television programs is provided which substantially eliminates or reduces disadvantages and problems associated with prior interactive television and Internet combinations.

In accordance with one embodiment of the present invention an apparatus for producing interactive television programs. The apparatus includes a television platform that has a bidirectional connection capable of transmitting data from the television platform to an information service provider and sending information to the television platform from an information service provider in the form of a deck of showlet cards. The deck of showlet cards contains a plurality of showlet cards with each of the plurality of showlet cards capable of executing an application or applet. Additionally, a tuner/decoder system connects to the television platform. The tuner/decoder is operable to receive, tune, and decode television channel signals. An audio/video overlay connects to the television platform and combines a showlet card from the deck of showlet cards and the television channel signals from the tuner/decoder system. A video/audio output system to sends the combined showlet cards and television channel signals to a television monitor for viewing. Finally, a synchronization unit is included. The synchronization unit triggers the audio/video overlay system to combine a specific showlet card with a corresponding specific event on the television channel signal.

The present invention provides various technical advantages over conventional television viewing and conventional Internet accessing. For example, one technical advantage is to provide an apparatus for producing interactive television programs that allows simultaneous viewing of television and coordinated displays of Internet information. Another technical advantage is the ability to run applications and applets at set intervals during a program.

### BRIEF DESCRIPTION OF THE DRAWINGS

The present invention will now be further described by way of example, with reference to the accompanying drawings in which:
FIGURE 1 illustrates an interactive Java television receiver;
FIGURE 2 illustrates Java TV Software/Hardware levels for the Java television platform; and,
FIGURE 3 illustrates a television displaying a showlet card and a television broadcast.

### DETAILED DESCRIPTION OF THE INVENTION

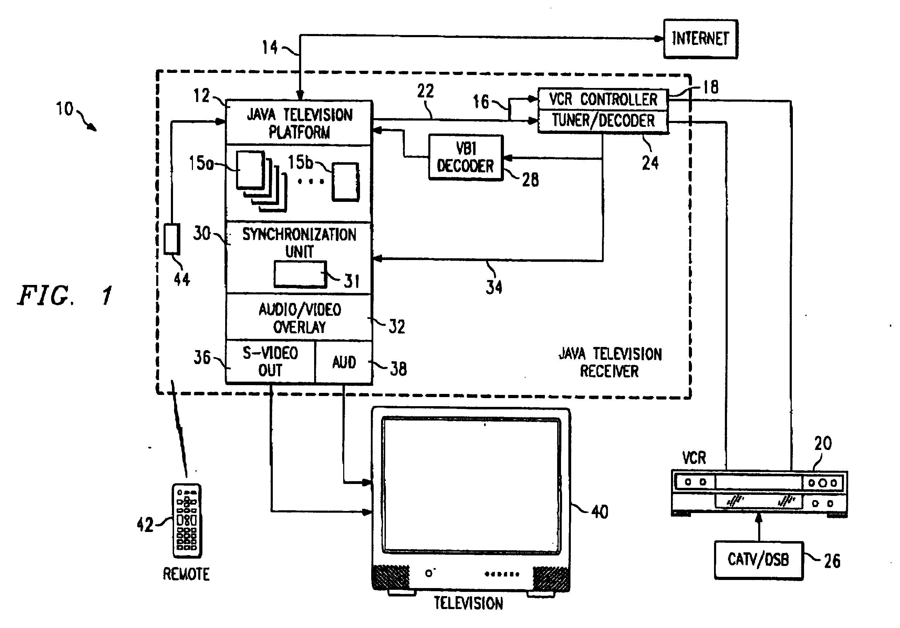

Figure 1 illustrates an Interactive Java Television Receiver (IJTVR) 10 including a Java television platform (JTVP) 12. JTVP 12 connects to an Internet service provider via a bidirectional Internet connection 14. This can be a conventional phone connection, an ISDN line, a T-1 line, coaxial cable, satellite transceiver, or any other means for connecting to the Internet. JTVP 12 includes a memory for storing a deck of showlet cards 15a or a showlet card 15b, or both. A Video Cassette Recorder (VCR) control line 16 connects JTVP 12 to a VCR controller 18 which in turn connects to a VCR 20. A tuner control line 22 connects JTVP 12 to a tuner/decoder 24 which receives an input from a cable television (CATV) source 26. Of course the source can be from a traditional cable television system, a direct broadcast satellite system (DBS), a regular satellite broadcast system, a traditional broadcast system, or any other ways of providing television to the home. This would include a television signal reproduced by VCR 20 or a laser disk player.

A vertical blanking interface (VBI) datacast decoder 28 receives a signal input from tuner/decoder 24 and provides outputs to JTVP 12. A synchronization unit 30 connects with JTVP 12. Synchronization unit 30 contains an internal timing mechanism 31 or can receive synchronization information from JTVP 12 via the VBI datacast decoder 28. Or both can be included. Attached to synchronization unit 30 is an audio/video overlay 32. An output from tuner/decoder 24 feeds the television signal to audio/video overlay 32 via television line 34. The output of audio/video overlay 32 is fed to a video output 36 and an audio output 38. Video output 36 can be a super video output or a regular video output with RCA jack cable support. Audio output 38 can support mono, stereo and surround sound. Video output 36 and audio output 38 connect to a television 40. Also included is a remote control unit 42. Remote control unit 42 may be an infrared mouse and keyboard unit. A remote signal is received by an infrared input connection 44 of IJTVR 10.

All of the above components, except for television 40, VCR 20, and remote control unit 42 form IJTVR 10. This unit can be assembled as a set top box, manufactured internal to a television, or provided as part of a computer which attaches to television 40.

In operation, tuner/decoder 24 receives a television signal and decodes the signal, if necessary. Multiple tuner/decoder 24 can be used to provide picture in a picture display. From the television signal, a specific television channel signal is chosen by the viewer, corresponding to the channel the viewer wishes to watch. The television channel signal is then output to audio/video overlay 32 and VBI decoder 28. VBI decoder 28 removes any information from the vertical blanking interval, such as closed-captioning information or Teletext data. The vertical blanking interval information is sent to JTVP 12. JTVP 12 also receives channel information from tuner/decoder 24. JTVP 12 contains channel map information. The channel map information associates a given television channel signal with a uniform resource locator (URL) for that particular television channel. Alternatively, a given television channel may be associated with a file transfer protocal (FTP) location or some other way of locating information on the Internet or any information service provider. For example, if a viewer tunes to the Cable News Network (CNN), the channel map information can associate that channel with the URL of CNN's web site: http://www.cnn.com. With this information, via Internet connection 14, JTVP 12 can connect to a specific area on the Internet and download a deck of showlet cards 15a. The deck of showlet cards 15a consist of a plurality of showlet cards 15b. Each showlet card 15b contains text or images or both which can be combined with the television channel signal by audio/video overlay 24. Additionally each showlet card 15b can contain an application or applet, written in Java or some other platform independent language, which will execute when showlet card 15b is displayed. Each interactive television show has its own deck of showlet cards 15a. Showlet cards 15b are displayed at certain, predetermined times during the program. The synchronization of the showlet cards 15b occurs in several ways. First, synchronization unit 30 may contain a timing mechanism 31. Timing mechanism 31 is calibrated to the television program's timing and, at specific intervals during the show, a showlet card 15b appears. For example, a first card may appear at one minute elapsed while a second card may appear at two minutes twenty-four seconds elapsed. Alternatively, synchronization information can be sent by a television program in the vertical blanking interface. VBI datacast decoder 28 can extract that information, which is transmitted to synchronization unit 30 via JTVP 12. The synchronization information will trigger a display of a certain showlet card 15b. Using either method, showlet cards 15b are displayed until the deck is exhausted.

As mentioned previously, audio/video overlay 24 will then combine the showlet card 15b, any VBI information and the television channel signal and output this combination to television 40. Typically the combination will result in the regular television broadcast in a first box and the Internet display in a second box. The first and second boxes can be sized and moved around the screen. More sophisticated overlays are also possible. Additionally, information concerning the URL or other Internet information can be sent by the television channel signal in the vertical blanking interval. That information can be decoded by VBI decoder 28 and sent to JTVP 12 where JTVP 12 can then access that URL via Internet connection 14.

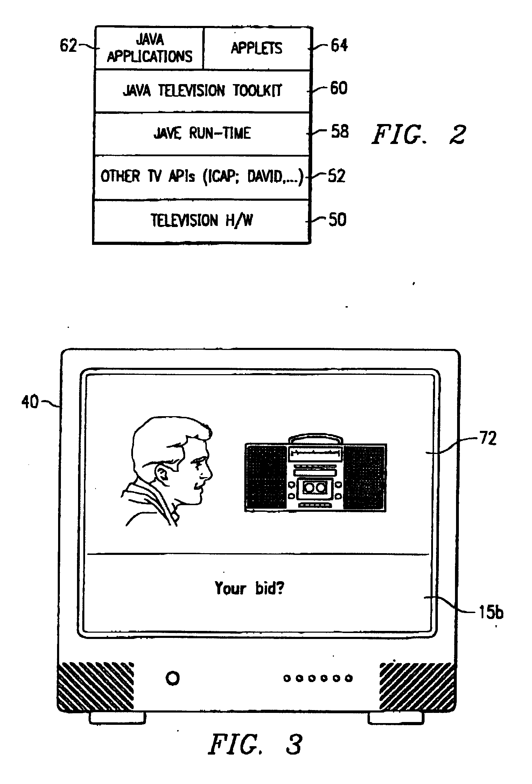

Figure 2 illustrates Java TV Software/Hardware levels that would be located in JTVP 12. At the bottom level are television hardware 50. These would include things such as audio and video output as well as channel tuners. The next level are existing interactive TV protocols 52 including Digital Audio/Video Interactive Decoder (DAVID) and Interactive Communications Applications Protocol (ICAP). Layered on top is the basic Java Operating System 58 with Java run time along with any applicable Java extensions. The inclusion of the Java run time facilitates the running of Java applications and Java applets.

The Java Television Toolkit (JTT) 60 is the next level. The toolkit can be thought of as an extension to the Java run time which allows it to perform the applications of JTVP 12 (i.e. integrating the Internet data with the TV broadcast). JTT 60 includes a channel model which are a set of software objects related to television channels and how the channel audio, video, and data are incorporated into the run time environment. The channel model comprises: a ChannelMap which provides an association between the channel properties, including those between the channel number and the associated URL; a ChannelLineup which is an electronic program guide for a channel; a ChannelDataStream which handles the data stream transmitted on the vertical blanking interface; and a ChannelObserver which updates the system based on content change. For example, if a show switches to a commercial break, a new web page related to the product being advertised can be displayed on the screen. This can provide additional product information or an opportunity to order the product.

A part of the Java channel model is the JTVP 12 packages. Each package contains classes, or commands, which are an extension to the basic Java Application Programing Interface (API). These include javatv.control which contains classes to support the integration of television signals and Internet data as well as control television channel and volume selection; javatv.channel which contains classes for supporting channel maps, channel lineups, and channel observers; and, javatv.epg which contains classes for manipulating an electronic program guide. Additionally, for an interactive environment where showlet cards 15b are used, javatv.showlet package would be included. This package contains classes supporting synchronized television and data content as well as providing other aspects of interactive television shows.

The final level is the Java Applications 62 and Applets 64. Java is a computing platform that is capable of sitting on top of other computing platforms, such as Microsoft Windows or OS/2. A program written in the Java language can then be run on any computer where the Java platform is present, no matter what the underlying platform is. In the context of the Internet and the world wide web, as long as the program being used to access the web contains the Java platform it can run applets or applications written in Java, no matter what type of computer or the underlying operating system. In other words, one program written in Java should be capable of running on any computer in the world. Since many different users access the Internet using a variety of computers with a multitude of operating system, the rapid growth of Java is not surprising. Applets are programs that require a Java compatible web browser, such as Netscape's Navigator or Sun's HotJava, to run. A Java application is a stand alone program that will run on any computer platform that contains the Java operating system or a sufficient subset of the operating system (Java run time). In the present context, the Java applications and applets would be designed to integrate Internet data and the television signals and would be based on the commands of the existing Java API and the extensions in the Java television toolkit 60. One such application is JavaVision, a top level user interface for the interactive television environment. In other words, it is akin to a browser. It provides for split screens of television signals and Internet data as well as graphical overlays. It also can provide support for electronic program guides as well as personalized program guides (where a user inputs his preferences and the program compiles a list of television programs that fit that interests). It can also facilitate in the programing of VCR 20.

Figure 3 illustrates a television 40 displaying a showlet card 15b and a television broadcast 72. In this example the showlet card 15b is shown as occupying the bottom of the screen and the television broadcast 72 as occupying the top portion. Of course, any other arrangement of split screens or frames is possible as well as overlaying the information.

In operation, a user would select an interactive television show by tuning to a particular station using an infrared remote control. This would trigger the JTVP 12 channel map to send a URL or some other way of specifying an Internet location to the Internet provider in order to request a specific Internet location. Alternatively, information stored in the vertical blanking interval would send a URL to the JTVP 12 and the Internet location would be retrieved. Then, the deck of showlet cards 15a for that particular program would be downloaded. As an example, consider a viewer watching a game show that requires in-studio participants to guess the price of various home products. When the viewer tunes into the program, a deck of showlet cards 15a would be downloaded into memory 13 of JTVP 12. Then, as the show progressed, various showlet cards 15b would be displayed at certain predetermined times. For example, when the first object is up to bid, showlet card 15b might be overlaid on the screen along with the television program asking the viewer to also bid on the item. when the next item is up to bid, another showlet card 15b might appear for that item, Since the entire IJTVR 10 is connected to the Internet, or alternatively, to some other information service provider, many people, geographically dispersed, can take part in the interactive game. The viewer could also tune to a different channel, where another interactive television show is playing. Again, a deck of showlet cards 15a corresponding to that show would be down loaded from an Internet site. If this program is a talk show, the showlets may be designed to allow the viewer to provide feedback regarding the subject of the talk show. The individual showlet cards 15b would be triggered in the same manner as before. If JTVP 12 is provided with sufficient memory 13, the first deck of showlet cards 15a can be stored while the viewer is viewing the second interactive television program. When the viewer switches back to the first program, that program can resume with the proper showlet cards 15b displaying at the same time.

Thus, it is apparent that there has been provided, an apparatus for the integration of television signals and Internet data that satisfies the advantages set forth above. Although certain embodiments have been described in detail, it should be understood that various changes, substitutions, and alterations can be made herein. For example, though the embodiment has been discussed in terms of Java applications and Internet providers, it may equally apply to other platform independent languages and other types of information service providers. Other examples may be readily ascertainable by one skilled in the art and can be made herein without departing from the spirit and scope of the present invention.

## Claims

1. An apparatus for producing interactive television programs comprising:
a television platform having a bidirectional connection capable of transmitting data to an information service provider or for receiving information from the information service provider;
means for displaying said information in the form of a plurality of showlet cards, each of the plurality of showlet cards operable to execute an application or applet;
a tuner/decoder system coupled to the television platform for receiving, tuning, and decoding television channel signals;
an audio/video overlay system operable to combine a showlet card from the plurality of showlet cards and television channel signals from the tuner/decoder system;
a video/audio output system for sending combined showlet cards and television channel signals to a television monitor;
a synchronization unit operable to trigger the audio/video overlay system to combine a specific showlet card with a corresponding specific event on the television channel signal.

2. The apparatus of Claim 1, wherein the information service provider provides Internet data.

3. The apparatus of Claim 1 or Claim 2, wherein the television platform is operable to run a Java operating system and Java applications and applets.

4. The apparatus of any preceding claim, wherein the synchronization unit is operable to trigger the audio/video overlay system with a program timing mechanism for combining one of the showlet cards with a specific event on the television channel signal based on a program's running time.

5. The apparatus of any of Claims 1 to 4, further comprising a vertical blanking interface datacast decoder operable to extract a plurality of text information from the television channel signal's vertical blanking interval, the vertical blanking interface datacast decoder further operable to send the plurality of text information to the television platform, the plurality of text information including synchronization information.

6. The apparatus of any of Claims 1 to 5, wherein a specific information service provider site is accessed by a channel mapping function stored within the television platform, the channel mapping function associating a specific television channel with the specific information service provider site.

7. The apparatus of Claim 6, wherein the information service provider provides Internet data and wherein a specific Internet site is accessed by a channel mapping function stored within the television platform, the channel mapping function associating a specific television channel with a specific uniform resource locator address.

8. The apparatus of Claim 5, wherein a specific information service provider site is accessed by transmitting data to the information service provider containing a specific locator address, the specific locator address sent by a specific television channel in the vertical blanking interval.

9. The apparatus of Claim 8, wherein the information service provider provides Internet data and wherein a specific Internet address is accessed by transmitting data to the Internet service provider containing a specific uniform resource locator address, the locator address sent by a specific television channel in the vertical blanking interval.

10. An interactive television receiver comprising:
a Java television platform having a bidirectional Internet connection capable of sending Internet data to the Java television platform and transmitting data from the Java television platform to an Internet provider, the Java television platform operable to run a Java operating system, the Internet data consisting of a plurality of showlet cards, each of the plurality of showlet cards operable to run a Java application or Java applet;
a tuner/decoder system coupled to the JAVA television platform
for receiving, tuning and decoding television channel signals;
an audio/video overlay system operable to combine at least one showlet card of the plurality of showlet cards and television channel signals from the tuner/decoder system;
a video/audio output system operable to send combined showlet card and television channel signals to a television monitor;
a vertical blanking interface datacast decoder operable to extract a plurality of text information from a television channel signal's vertical blanking interval, the vertical blanking interface datacast decoder further operable to send the plurality of text information to the Java television platform;
an infrared receiver unit operable to receive an input from an infrared input device in order to control selection of television channel signals and Internet data; and,
a synchronization unit operable to communicate with the audio/video overlay system and trigger the combining of the showlet card with the television channel signal upon the receipt of a synchronization event.

11. The interactive television receiver of claim lo, wherein the synchronization event is produced by a timing mechanism synchronized to a television program's clock.

12. The interactive television receiver of Claim 10, where in the synchronization event is produced by encoding synchronization events into the television channel signal's vertical blanking interface.

13. The interactive television receiver of any of Claims 10 to 12, wherein a specific Internet site is accessed by a channel mapping function stored within the Java television platform, the channel mapping function associating a specific television channel with a specific uniform resource locator address.

14. The interactive television receiver of any of Claims 10 to 13, wherein a specific Internet address is accessed by transmitting data to the Internet provider containing a specific uniform resource locator address, the uniform resource address sent by a specific television channel in the vertical blanking interval.

15. A method for interacting with a television shows, comprising the steps of:
selecting a television channel signal from a television broadcast source;
identifying a specific site on an information service provider network for a given television channel;
locating the specific site;
sending a plurality of showlet cards from the specific site to a television platform;
waiting for a synchronization event,
combining a first showlet card with the television channel signal corresponding to the synchronization event;
executing an interactive application or an interactive applet contained on the first showlet card;
displaying the combination on a display;
repeating the steps of waiting, combining, executing and displaying for every other synchronization event until a final showlet card is displayed.

16. The method of Claim 15, wherein the step of locating the specific site comprises locating an Internet service provider.

17. The method of Claim 15 or Claim 16, wherein the step of identifying a specific site further consist of using a channel map to associate the television channel signal with the specific site.

18. The method of any of Claims 15 to 17, wherein the step of identifying a specific site further consists of sending information concerning the specific site in a vertical blanking interface of the television channel signal, decoding the information using a vertical blanking interface decoder and sending the information to the information service provider.

19. The method of any of Claims 15 to 18, wherein the step of waiting for a synchronization event further consists of waiting for a timing means to reach a certain predetermined time to produce the synchronization event.

20. The method of any of Claims 15 to 19, wherein the step of waiting for a synchronization event further consist of waiting for the synchronization event encoded in a television channel signal's vertical blanking interface.
